# EUROPÄISCHE PATENTSCHRIFT

(11) **EP 0 620 094 B1**
(45) Veröffentlichungstag und Bekanntmachung des Hinweises auf die Patenterteilung: **29.10.1997**
(21) Anmeldenummer: 93810274.6
(22) Anmeldetag: 15.04.1993
(51) Int. Cl.: B29C 45/14

(54) **Verfahren und Vorrichtung zur Herstellung eines Reissverschlusses**
Method and apparatus for producing a slide fastener
Procédé et dispositif pour fabriquer une fermeture à glissière

(43) Veröffentlichungstag der Anmeldung: 19.10.1994
(73) Patentinhaber: Mayerhofer, Friedrich, CH-2543 Lengnau (CH)
(72) Erfinder: Mayerhofer, Friedrich, CH-2543 Lengnau (CH)
(74) Vertreter: AMMANN PATENTANWAELTE AG BERN

(56) Entgegenhaltungen:
- EP-A- 0 356 600
- CH-A- 248 261
- FR-A- 2 342 835
- US-A- 2 529 091
- US-A- 3 642 417
- US-A- 4 123 495

## Beschreibung

Die vorliegende Erfindung bezieht sich auf die Herstellung von Reissverschlüssen im Spritzgiessverfahren.

Reissverschlüsse werden in der Massenfertigung zumeist im Spritzgiessverfahren aus Kunststoff hergestellt. Um eine möglichst hohe Produktionsrate zu erreichen, kommt es darauf an, dass die Reissverschlüsse in möglichst wenigen Spritzvorgängen, am besten in einem einzigen Spritzvorgang, hergestellt und im gleichem Werkzeug ohne grösseren Aufwand in verschiedenen Längen hergestellt werden können. Eine andere Anforderung an Werkzeuge für das Spritzgiessen von Reissverschlüssen besteht darin, dass sogenannte slit-type Reissverschlüsse darin gefertigt werden können. Slit-type Reissverschlüsse sind Reissverschlüsse, deren Zähne am Kopf einen Schlitz und am Fuss einen entprechenden Vorsprung aufweisen, wobei der Vorsprung in den Schlitz eines Zahns am gegenüberliegenden Reissverschlussband eingreift, wenn der Reissverschluss geschlossen ist. Ein slit-type Reissverschluss zeigt daher eine erhöhte Festigkeit und die Zähne sind gegen ein seitliches Herausschieben gesichert.

Ein hierfür geeignetes Werkzeug beschreibt die EP-0 356 600. Die Form besteht darin aus zwei rechts und links von einem Schieber symmetrisch angeordneten Bandformen für je zwei Reihen von Zähnen, die direkt an in die Form eingelegte Reissverschlusstragbänder angespritzt werden. Der Schieber hat die Funktion, in einer Stellung Formen für die oberen und unteren Endglieder bereitzustellen, und in einer zweiten Stellung für längere Reissverschlüsse die rechte und die linke Formhälfte zu einer durchgehenden Form für eine lange Reissverschluss-Gliederkette zu verbinden.

In der rechten und der linken Bandform sind jeweils noch Schlitzformer in der Art langgestreckter Leisten mit einem Querschnitt entsprechend einem abgeschrägtem U vorhanden. Während des Spritzens werden die Schlitzformer von einem Andruckkeil gegen die Zahnformen gedrückt, wodurch ein Schenkel des U's in die Formen für die Köpfe der Zähne hineinragt und den Schlitz ausformt. Beim Ausstossen der gespritzten Reissverschlussbänder werden die Zahnformen und mit ihnen auch die Schlitzformer gegenüber der Basis der Form angehoben. Die Schlitzformer verlieren dabei den Kontakt zu dem Andruckkeil und werden von Federn aus den Zahnschlitzen herausgedrückt, wodurch die Zähne und damit die Reissverschlussbänder aus der Form herausgehoben werden können.

Gerade das Herausdrücken unter Federkraft stellt einen besonderen Schwachpunkt dieser bekannten Konstruktion dar. Es kommt bei den Bandformen darauf an, dass die Schlitzformer gleichmässig über die gesamte Länge aus den Schlitzen herausgleiten. Geschieht dies nicht, zum Beispiel wegen über die Länge unterschiedlicher Federstärke oder weil der Schlitzformer an einem Ende in den Zähnen fester haftet als an einem anderen Ende oder weil nicht die gesamte Länge der rechten oder linken Formhälfte benutzt wird, kann der Schlitzformer verklemmen und die Form muss manuell wieder funktionsfähig gemacht werden. Ein weiterer Nachteil besteht darin, dass eine relativ hohe Grenze für die geringstmögliche Länge eines in dieser Form spritzbaren Reissverschlusses vorgegeben ist. Dies ergibt sich zum einen daraus, dass die rechte und linke Formhälfte im gleichen Ausmass verwendet werden müssen. Für jede Formhälfte resultiert die geringstmögliche Länge aus der Position der Düse zur Zuführung des Spritzmaterials in die Form, die sich am nächsten zum Schieber befindet. Da die Spritzmaterialzufuhr jedoch zentral etwa beim Schieber erfolgt, bleibt über weiter entfernt vom Schieber angeordneten Düsen, die für kürzere Reissverschlüsse stillgelegt werden, unverbrauchtes, erhitztes Spritzmaterial im Heisskanal stehen und geht dabei einen Zersetzungsprozess ein.

Eine Aufgabe der vorliegenden Erfindung ist ein Verfahren zur Steuerung des Schlitzformungswerkzeugs in einer Reissverschluss-Spritzgiessform für slit-type Reissverschlüsse anzugeben, das ein schnelleres und sichereres Oeffnen und Freigeben des Spritzgiesserzeugnisses bietet.

Ein Verfahren, das die Aufgabe löst, ist in Anspruch 1 angegeben. Bevorzugte Varianten und Ausführungsvorrichtungen des Verfahrens sind in den weiteren Ansprüchen definiert.

Demgemäss wird in einer Form zum Spritzen von Reissverschlüssen ein Schlitzformer in die Zahnformen ein- und ausgefahren. Der Schlitzformer besteht aus einer Leiste von L-förmigem Querschnitt, wobei der Winkel zwischen Fuss und Balken, das heisst dem aufrechten Schenkel des L, von 90° deutlich verschieden ist. Eine Form für ein Reissverschlussband besteht aus einer Reihe von Formen für Zähne, das heisst für die Verbindungsglieder des Reissverschlusses, wobei vor dem Spritzen in die geöffnete Form das Trägerband eingelegt wird. Der Fuss des Schlitzformers ragt bei geschlossener Form in die Zahnformen hinein. Wenn das Spritzmaterial eingespritzt wird, werden Zähne erzeugt, deren Füsse das Trägerband umfassen und deren Köpfe wegen des in die Form ragenden Schlitzformerfusses einen Schlitz aufweisen.

Der Balken des Schlitzformers erstreckt sich in einen Schlitz, der in der Basis der Form schräg zur Formöffnungsebene längs der Reihe der Zahnformen ausgebildet ist, und zwar so, dass der Balken des Schlitzformers und damit der Schlitzformer selbst im wesentlichen nur parallel zur Schlitzebene beweglich ist. Die Formöffnungsebene geht in etwa mittig durch die Zahnformen.

Der Ausstosser, der zum Ausdrücken des Spritzgiesserzeugnisses angenommener Weise nach oben aus der Form dient, drückt beim Oeffnen auch auf das Ende des Schlitzformerbalken, wodurch dieser auch nach oben gedrückt und gleichzeitig der Fuss des Schlitzformers aus den Zähnen zwangsweise herausgezogen wird, da der Schlitz eine seitliche Bewegung des Schlitzformers erzwingt. Beim Schliessen der Form erzwingt der Schlitz die umgekehrte Bewegung des Schlitzformers. Der Schlitzformer wird also zwangsweise beim Ausstossen durch die Führungswirkung des Schlitzes aus den Zahnköpfen herausgezogen und beim Schliessen der Form ebenso zwangsweise in die Zahnform eingefahren. Dadurch kann die Bewegung des Schlitzformers und damit der Ausstoss- und Schliessvorgang der Form zeitlich genau gesteuert werden, und eine beträchtliche Erhöhung der Ausstossgeschwindigkeit ohne Gefahr des Blockierens wird möglich.

Eine in diesem Zusammenhang bevorzugte Reissverschluss-Spritzgiessform besitzt die Eigenschaft, das Spritzen von Reissverschlüssen verschiedenster Länge zuzulassen. Im Unterschied zum gängigen mittigen Schieber weist diese einen Schieber an einem Ende der Form auf, zum Beispiel am rechten Ende. Dann erstreckt sich die ganze Bandform, also die Form für die Reissverschlussbänder, zur linken des Schiebers, und zur rechten desselben befinden sich nur Fangformen zum Positionieren eines zweiten Reissverschlusses, an den mittels der im Schieber vorhandenen Form noch die Endglieder angespritzt werden müssen.

Die bevorzugte Form weist zwei parallele Reihen von Zahnformen auf, wobei die Köpfe der Zähne analog der Anordnung im Reissverschluss jeweils zur anderen Reihe hin zeigen.

Zwischen den Reihen befindet sich der Materialzuführungskanal oder Angusskanal, der beim Oeffnen der Form wie die Zahnformen geteilt wird. Zu diesem Kanal bestehen über eine Anzahl Düsen Verbindungen vom Heisskanal, der in einer der beiden Formhälften verläuft. Der Heisskanal ist so ausgelegt, dass der Materialfluss zunächst zu der Düse geleitet wird, die am weitesten entfernt vom Schieber angeordnet ist, dann zu immer näher am Schieber liegenden Düsen hin erfolgt. Da die am nächsten zum Schieber liegende Düse immer in Betrieb ist, ist sichergestellt, dass unabhängig von der Länge des gerade zu spritzenden Reissverschlusses kein Spritzmaterial im Heisskanal über längere Zeit stehen bleibt. Die Feineinstellung der Reissverschlusslänge kann durch einen Schieber erfolgen, der im Angusskanal verschiebbar ist.

Die Erfindung soll weiter anhand eines Ausführungsbeispiels unter Hinzuziehen von Figuren erläutert werden.
- Fig. 1: zeigt eine Aufsicht auf die untere Hälfte der Spritzgiessform gemäss Schnittlinie I-I in Fig. 2,
- Fig. 2: zeigt einen Längsschnitt durch die Spritzgiessform gemäss Schnittlinie II-II in Figur 1,
- Fig. 3: zeigt einen Schnitt gemäss Schnittlinie III-III in Figur 1, und
- Fig. 4: zeigt einen Schnitt wie Figur 3, jedoch mit geöffneter Form und ausgefahrenem Ausstosser.

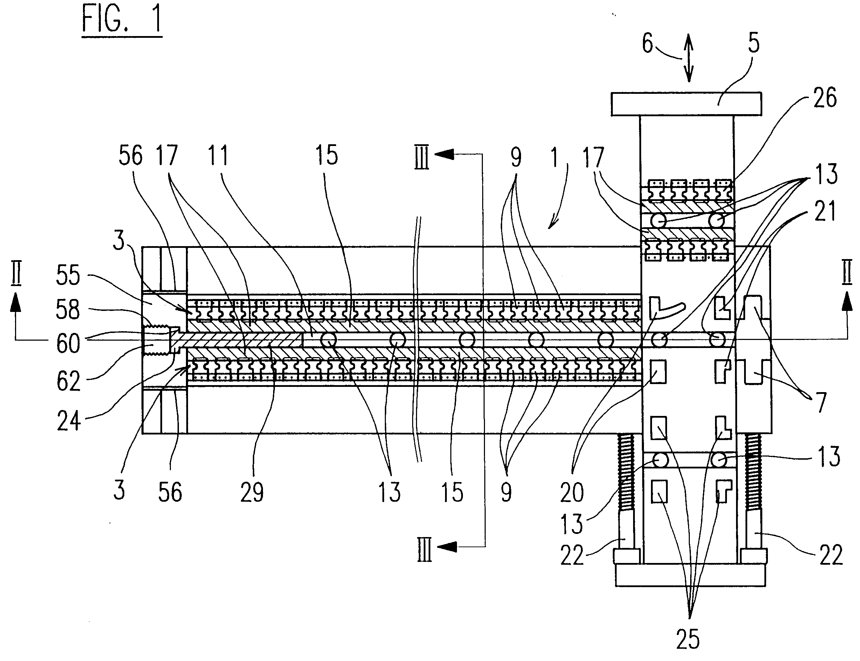

Figur 1 zeigt eine Aufsicht auf die erfindungsgemässe Spritzgiessform 1 mit den beiden Bandformen 3, dem Schieber 5 und den Positionierhilfen 7. Die Bandformen 3 weisen jeweils eine Reihe von Zahnformen 9 und eine sich längs erstreckende Bandauflage 10 auf, über die das Tragband gelegt wird und die der Abdichtung gegen seitlich durch bzw. über das Tragband hinweg austretendes Spritzmaterial dient. Zwischen den beiden Bandformen 3 verläuft der Angusskanal 11, in dessen Grund sich die Bohrungen 13 für die Zentralausstosser 45 befinden, die auf den im Kanal ausgebildeten Anguss einwirken. Die Zahnformen 9 können direkt in die Basis der unteren Formhälfte 1 oder in speziellen Einsätzen ausgebildet sein, die in die Basis eingelegt sind. Die Verwendung derartiger Einsätze hat den Vorteil, dass sie aus einem für das Spritzgiessverfahren besonders geeigneten Material hergestellt werden können und dass bei Abnutzungserscheinungen nur die Einsätze ausgewechselt werden müssen.

Der Schieber 5 ist nahe einem Ende der Spritzgiessform gemäss Pfeil 6 verschiebbar angeordnet. Schieber 5 weist im vorliegenden Beispiel drei Sätze von Formen auf, die als Verlängerung der Bandformen 3 zum Anfertigen der Endstücke oder einfach als Verlängerung dienen. In der gezeigten Stellung des Schiebers 5 stellt dieser die Formen für die Endglieder eines einseitig trennbaren Reissverschlusses bereit, nämlich die Formen 20 für Banane und Box bzw. Box-adapter und die Formen 21 für die oberen Endglieder, die sogenannten top stops.

Diese Stellung des Schiebers 5 ist durch den Anschlag 22, hier in der Form von eingeschraubten Bolzen, die bis zu einer definierten Position in die Form eingeschraubt werden können, als eine Endstellung definiert. Wird der Anschlag 22 entfernt, so kann der Schieber 5 weiter durchgeschoben werden, so dass der zweite Satz Formen 25 für Endglieder in die Spritzgiessstellung gelangt. Im vorliegenden Beispiel sind dies Formen für die oberen und unteren Endglieder eines nicht teilbaren Reissverschlusses.

In der zweiten, fest vorgegebenen Endstellung des Schiebers 5 werden einfach Verlängerungen 26 der Bandformen 3 bereitgestellt.

Auf der den Bandformen 3 gegenüberliegenden Seite des Schiebers 5 befinden sich Positionierhilfen 7. Sie dienen dazu, die beiden letzten Zähne eines Reissverschlusses aufzunehmen, um diesen damit relativ zu den Formen der oberen Endglieder 21 zu positionieren, so dass diese in der richtigen Position an die Tragbänder angespritzt werden können.

Im Angusskanal 11 ist der verschiebbare Längeneinsteller 29 angeordnet, mit dessen Hilfe die Länge des zu spritzenden Reissverschlusses eingestellt werden kann, gegeben durch die Distanz zwischen dem Ende des Längeneinstellers 29 und dem Schieber 5, die die aktive Länge der Bandformen 3 angibt. Der Längeneinsteller 29 ist in der oberen Formhälfte 30 geführt, wie noch erläutert werden wird, und bewegt sich mit dieser beim Öffnen der Form nach oben, so dass die vom Einsteller 29 verdeckten Zentralausstosser 45 freigegeben werden. Der stabförmige Längeneinsteller 29 weist an einem Ende einen verbreiterten Kopf 24 auf. An der oberen Formhälfte 30 ist eine Führungsleiste 55 vorhanden, die in einer Nut 56 in der unteren Formhälfte gleitend eingepasst ist. In der Führungsleiste 55 ist eine Bohrung 58 vorhanden, die im geschlossenen Zustand der Form mit dem Angusskanal 11 fluchtet. Zur Form hin ist die Bohrung 58 verengt. Diese Verengung wirkt als Anschlag 60 für den Kopf 24 des Längeneinstellers 29. In die Bohrung 58 ist ein Gewinde eingeschnitten, um eine Madenschraube 62 zum Fixieren des Längeneinstellers 29 einschrauben zu können.

Der Angusskanal 11 ist zu etwas mehr als der Hälfte in der oberen Formhälfte 30 eingearbeitet, wodurch sich eine geringer Hinterschnitt ergibt. Durch diesen Hinterschnitt wird der Längeneinsteller 29 in der oberen Formhälfte geführt und beim Öffnen der Form mit der oberen Formhälfte nach oben bewegt. Der im Angusskanal 11 gebildete Anguss, der gleichermassen von diesem Hinterschnitt gehalten wird, muss in der unteren Formhälfte zurückgehalten werden. Dazu dient, wie unten dargestellt, die Formgebung der Bohrungen 13, unterstützt von den Schlitzformern 17 und dem Schwund des Angusses, der das Herausreissen aus der oberen Formhälfte 30 erleichtert.

Schliesslich sind in der unteren Formhälfte 1 noch die beiden Schlitzformer 17 vorhanden. Es ist klar, dass die Verlängerung 26 der Bandformen 3 im Schieber 5 die gleichen Funktionselemente wie die Bandformen 3 aufweisen, nämlich Zentralausstosser, Schlitzformer, Angusskanal und Zahnformen. Ausstosser und Angusskanal sind, gegebenenfalls modifiziert, auch in den Formen für die Endglieder im Schieber 5 vorhanden. Diese Funktionselemente werden durch Betätigungselemente betätigt, die an der Schieber-Form-Gleitfläche unterbrochen sind und daher die Schieberbewegung nicht behindern.

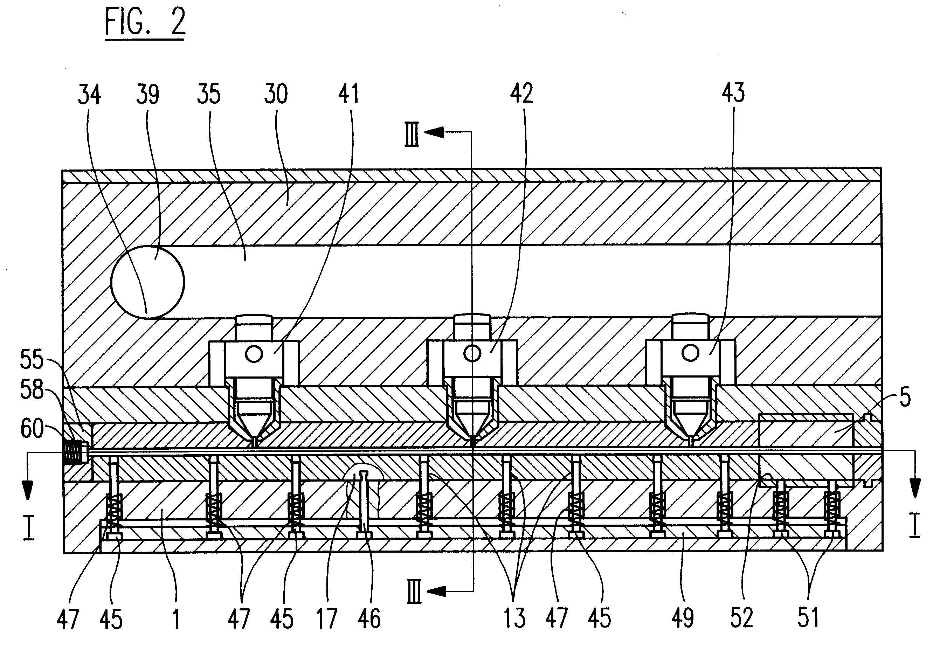

Die obere Formhälfte 30 ist in Hinsicht auf die Bandformen im wesentlichen spiegelbildlich zur unteren Formhälfte 1 ausgeführt. Wie der Längsschnitt der Figur 2 zeigt, befindet sich in der oberen Formhälfte die Spritzgiessmaterialversorgung. Sie besteht aus dem Heisskanal 35, in den am einen Ende aus der Oeffnung 39 der Zuleitung 38 das Giessmaterial einströmt und zur schiebernahen Düse 43 hin fliesst. Das andere Ende des Heisskanals 35 wird auf geeignete, bekannte Art verschlossen, z. B. durch einen Schraubdeckel. Die Formen im Schieber 5 werden über den Angusskanal 11 versorgt. Die Düsen 41 bis 43 sind bevorzugt getrennt steuerbar. Bei kurzen Reissverschlusslängen werden die Düse 41 oder die Düsen 41 und 42 abgestellt. Die Position der Düse 43, die auf jeden Fall zum Einspritzen verwendet wird, legt also die Länge des kürzest möglichen Reissverschlusses fest, der noch gespritzt werden kann.

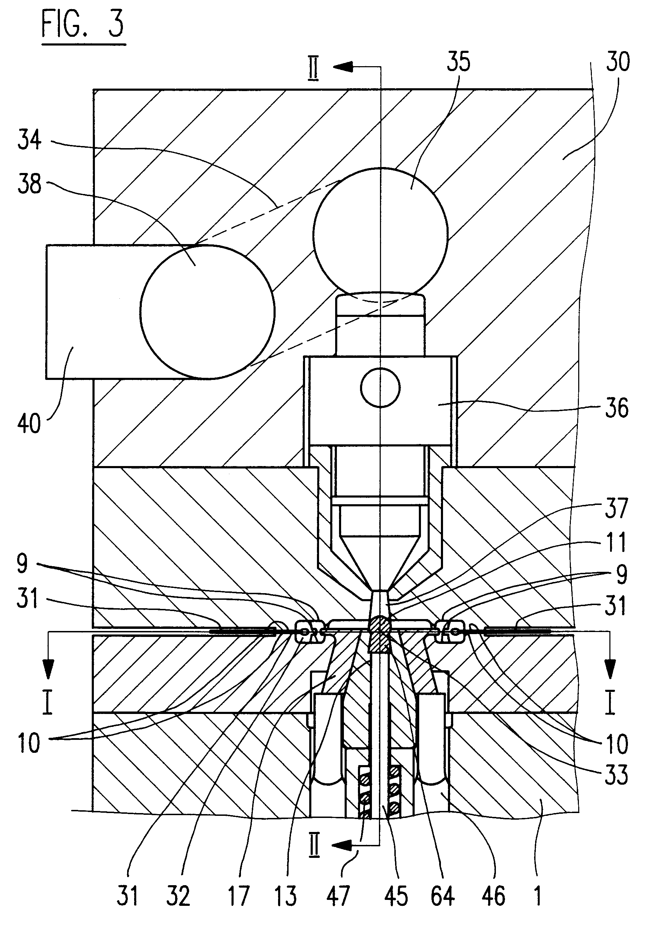

Oberhalb der Düsen 41 bis 43 verläuft der Heisskanal 35, der über die Verbindung 34 nahe dem schieberfernen Ende der Form mit der Zuleitung 38 in Verbindung steht, in die das Spritzgiessmaterial über den Anschluss 40 (siehe Figur 3) eingeleitet wird.

Fig. 2 zeigt als Teilausschnitt 44 die Verbindung zwischen den Ausstossern 46 und den Schlitzformern 17, die durch am Boden geweitete Nuten in den Schlitzformern 17 hergestellt wird, in die die als Nutsteine komplementär ausgeformten oberen Enden der Ausstosser 46 hineinragen. Die unteren Enden der Ausstosser 45, 46 sind in einer zweiteiligen Ausstosserplatte 49 gehalten. Durch diese Ausbildung der Verbindung der Ausstosselemente werden die Schlitzformer 17 auch zwangsweise wieder in die zum Spritzgiessen nötige Position zurückbewegt, ohne dass insbesondere die unten erläuterte Querbewegung der Schlitzformer 17 behindert wird.

Die Ausstosser für die Ausstosserelemente im Schieber 5 sind unterteilt in jeweils einen oberen, für gegebenenfalls jeden Formensatz vorhandenen Teil im Schieber und einen unteren, mit der Ausstosserplatte 49 verbundenen Teil 51. In der zurückgezogenen Stellung der Ausstosser sind die unteren Teile 51 in die untere Formhälfte zurückgezogen bzw. mit ihrem oberen Ende plan zur Gleitfläche 52 des Schiebers 5, so dass dieser beweglich ist. Während der Betätigung der Ausstosser 45, 46 werden die unteren Teile 51 nach oben in den Schieber 5 eingeschoben und betätigen dabei die oberen Teile der Schieberausstosser. Diese oberen Teile sind auf geeignete Art gegen Herausrutschen aus dem Schieber gesichert und verfügen über eigene Rückstellorgane entsprechend den Federn 47. Die oberen, im Schieber eingebauten Ausstosserelemente sind ansonsten wie diejenigen der Bandformen 3 ausgeführt bzw. an die besonderen Verhältnisse für die Endgliederformen angepasst und in Fig. 2, die eine Zwischenposition des Schiebers 5 zeigt, nicht dargestellt.

Figur 3 zeigt einen Schnitt quer zur Form nach dem Einspritzen des Spritzgiessmaterials. In der unteren Formhälfte 1 befinden sich die Zentralausstosser 45 sowie die seitlichen Ausstosser 46, die auf die Schlitzformer 17 einwirken. Um die Zentralaustosser 45 herum sind die Rückholfedern 47 angeordnet, die beim Schliessen der Form die Ausstosser in die gezeigte Position zurückbewegen. Im zurückgezogenen Zustand der Zentralausstosser 45 sind deren Enden etwas in die Bohrungen 13 zurückgezogen. Der entstehende freie Raum ist nach unten hin erweitert. In ihm bilden sich Angusszapfen 64, die beim Öffnen der Form als Ausreisser wirken und den Anguss aus der oberen Formhälfte 30 herausziehen, da der Angusskanal zu etwas mehr als der Hälfte in der oberen Formhälfte 30 eingearbeitet ist, d. h. die Formtrennebene liegt etwas unterhalb der Mitte des Angusses, wodurch sich eine geringe Verengung der Öffnung des oberen Formteils des Angusskanals 11 ergibt. Sie ist so ausgelegt, dass einerseits der Längeneinsteller 29 sicher von der oberen Formhälfte beim Öffnen mitgenommen wird, andererseits der Anguss noch herausgerissen werden kann. In der Regel ist sie daher, wie aus den Figuren ersichtlich, kaum sichtbar. Beispielsweise kann die Formtrennebene bei einem Angusskanaldurchmesser von 2mm um 2/10 mm nach unten verlegt sein. Erleichtert wird das Herausreissen durch den regelmässig auftretenden Schwund des Giessmaterials beim Erkalten.

In den Bandformen 3 liegen die Tragbänder 31 jeweils eingeklemmt zwischen den Tragbandauflagen 10 der unteren und oberen Formhälfte 1 und 30, so dass während des Spritzen kein Material austreten kann, und tragen die Zähne 32, die in den Zahnformen 9 geformt sind. Die Zähne 32 sind nach dem Spritzen noch durch den Anguss 33 verbunden, der später durch Biegen, Schneiden oder andere, bekannte Operationen abgetrennt wird. Von oben führen in den zentralen Angusskanal 11 von den Düsen 41 bis 43 jeweils ein Düsenkanal 37.

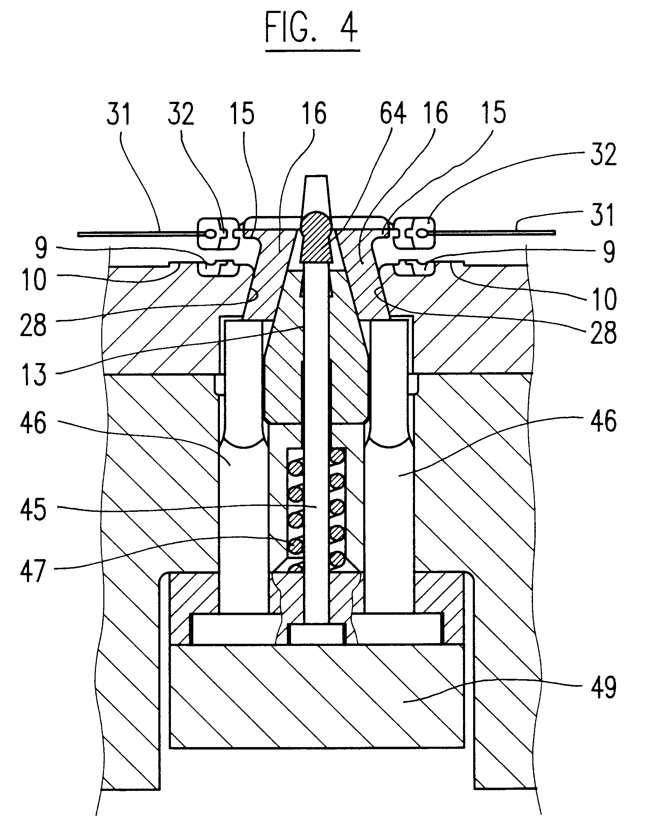

Figur 4 zeigt die geöffnete Form mit betätigten Ausstossern 45 und 46. Die beiden Formhälften 1 und 30 sind voneinander getrennt und die Ausstosser 45 und 46 gegenüber der unteren Formhälfte 1 nach oben bewegt. Die dabei ebenfalls nach oben bewegten Schlitzformer 17 haben dabei wegen der Führung durch die Schlitze 28 auch eine seitliche Bewegung von den jeweiligen Zahnreihen weg ausgeführt, so dass der Reissverschluss nun frei auf dem Zentralausstosser 45 aufliegt und aus der Form entnommen werden kann. Diese seitliche Bewegung der Schlitzformer 17 muss synchron zur Ausstosserbewegung stattfinden, um einen schnellen und sicheren Ausstossvorgang zu gewährleisten. Dazu sind die Schlitzformer als Leisten mit etwa L-förmigem Querschnitt ausgebildet, wobei das L jedoch einen deutlich von 90° Grad abweichenden Winkel zwischen Fuss 15 und Balken 16 aufweist, der in dem Schlitz 28 beidseitig gleitend gelagert ist. Ein bevorzugter Winkel liegt im Bereich von 50° bis 85° und beträgt beispielsweise 75°.

Nach dem Spritzen der Zähne fehlt dem Reissverschluss noch eine Sorte Endstücke, im vorliegenden Beispiel die top stops. Der Reissverschluss wird daher in der Regel aus den Bandformen 3 auf die andere Seite des Schiebers 5 transportiert und die letzten beiden Zähne werden in die Positionierhilfen 7 eingelegt, während zwei neue Tragbänder in die Form eingelegt werden. Im nächsten Spritzgang werden damit in den Bandformen 3 ein neuer Reissverschluss mit Zähnen und einer Sorte Endstücke gespritzt und am vorher gespritzten Reissverschluss die noch fehlenden Endstücke angespritzt.

Mit einer geeigneten Steuerung können in kontinuierlicher Betriebsweise Reissverschlüsse von sehr unterschiedlicher Länge produziert werden. Die kürzeste Länge ist durch die Position der Düse 43 gegeben, da bis zu dieser der Längeneinsteller 29 eingefahren werden kann, ohne den Spritzgiessmaterialzufluss vollständig zu unterbrechen. Da das Spritzgiessmaterial auch bei extrem kurzer Reissverschlusslänge über die dann inaktiven Düsen 41 und 42 hinwegströmt, ist sichergestellt, dass kein Material über diesen Düsen längere Zeit verweilt und altert oder sich zersetzt.

Die in einem Spritzvorgang grösstmögliche Länge ist offensichtlich durch die Länge der Bandformen 3 gegeben. Eine übliche obere Grenze liegt um 650 bis 700 mm Länge der Bandformen, die jedoch bezüglich der Erfindung keine einschränkende Obergrenze darstellt. Reissverschlüsse grösserer Länge werden in mehreren Spritzgängen hergestellt, wobei der Schieber 5 in seine zweite Endposition geschoben wird, in der seine Zahnformen 26 benutzt werden, um die Bandformen 3 zu verlängern. Damit können beliebig lange Reissverschlüsse hergestellt werden.

Modifikationen der Erfindung sind dem Fachmann aus der Beschreibung zugänglich, ohne den Bereich der Erfindung zu verlassen. Denkbar ist es beispielsweise, den Schieber mit mehr als 3 oder anderen Formeinheiten auszustatten, was die Verwendung eines nur zwei Formen aufweisenden Schiebers nicht ausschliesst. Möglich wäre auch, anstatt des Schiebers eine feste Endgliederform vorzusehen. Die Ausstosser könnten auch nur punktuell, zum Beispiel als eine Reihe Stifte, ausgebildet sein, und auch der Balken des Schlitzformers könnte, anstatt der naheliegenden Form als in einem Schlitz gleitende Leiste, als Stifte, die in Löchern in der unteren Formhälfte gleiten, vorliegen. Statt der Gleitflächen zwischen den seitlichen Ausstossern 46 und den Schlitzformern 17 sind auch Rollen, Walzen oder dergleichen denkbar. Es kann auch eine andere Anzahl Düsen als drei, insbesondere auch nur eine, vorgesehen werden.

Ausstosser sowie Verbindungen und Betätigungsorgane dieser Elemente können in weitem Rahmen unter Verwendung der in der Technik vorbekannten Ausführungen variiert werden, soweit die gegenüber den Ausstossern 46 nötige seitliche Beweglichkeit der Schlitzformer 17 nicht eingeschränkt wird. Insbesondere kommen für den Zentralausstosser die vorbekannten Ausführungen in Betracht. Denkbar ist auch, dass die Ausstosserelemente, wie z. B. die Ausstosserleiste und/oder die Schlitzformer, frei oder unter der Wirkung eigener Rückstellelemente zurückfallen, wenn die Ausstosser zurückfahren.

Denkbar ist ein jederzeit verstellbarer Längeneinsteller, z. B. dadurch, dass der Längeneinsteller im wesentlichen als Stab von der Länge der Bandformen ausgeführt ist und von einem geeigneten Antrieb im Angusskanal positioniert wird. Damit wäre es möglich, die Länge der Reissverschlüsse ohne Unterbrechung für jeden Spritzgiessvorgang getrennt einzustellen. Möglich ist die Führung des Längeneinstellers in der oberen Formhälfte auf andere Art als einen Hinterschnitt der Angussform, z. B. durch Führungsnuten oder -leisten.

Die Anschläge 22 können auch mittels einer Steckverbindung oder einem Renkverschluss an der Form befestigbar sein.

## Patentansprüche

1. Verfahren zum Spritzen eines Reissverschlusses mit mindestens einem Band, das Zähne (32) an einem Tragband (31) aufweist, wobei Füsse der Zähne (32) diese mit dem Tragband (31) verbinden und die Köpfe der Zähne (32) einen Schlitz aufweisen, in einer Spritzgiessform (1, 30), in der die Zähne (32) an das eingelegte Tragband (31) angespritzt werden und die mindestens einen Schlitzformer (17) zum Ausformen eines Schlitzes in den Zahnköpfen aufweist, dadurch gekennzeichnet, dass der Schlitzformer (17), wenn das Band (31) nach dem Spritzen aus der Form ausgestossen wird, in Ausstossrichtung bewegt wird, wobei der Schlitzformer (17) durch die Wirkung einer gegen diese Richtung schräg angeordneten zweiseitig wirkenden Führung (28) aus den Zahnkopfschlitzen herausgezogen wird.

2. Verfahren gemäss Anspruch 1, dadurch gekennzeichnet, dass die Schlitzformerbewegung synchron zur Ausstossbewegung durchgeführt wird.

3. Verfahren gemäss Anspruch 1 oder 2, dadurch gekennzeichnet, dass Ausstosser (45, 46) während des Ausstossens direkt oder über Zwischenelemente auf Angussteile (11) der Zähne (32) und auf Schlitzformer (17) drücken und beim Zurückfahren in die Spritzstellung zumindest die Schlitzformer (17) zwangsweise wieder zurückziehen.

4. Vorrichtung zur Durchführung des Verfahrens gemäss einem der Ansprüche 1 bis 3 mit einer Spritzgiessform, die mindestens eine Reihe von Formen (9) für Zähne eines Reissverschlusses und mindestens einen Schlitzformer (17) zur Ausbildung von Schlitzen in den Köpfen der Zähne (32) aufweist und deren Formtrennebene in etwa mittig durch die zahnformen (9) verläuft, dadurch gekennzeichnet, dass der Schlitzformer neben dem der Ausbildung der Schlitze in den Zahnköpfen dienenden Schlitzformteil (15) ein Führungsteil (16) aufweist, das in einer zweiseitig wirkenden Führung (28), die schräg zur Ausstossrichtung und komplementär zum Führungsteil des Schlitzformers (16) in der Spritzgiessform (1) ausgebildet ist, beweglich geführt ist.

5. Vorrichtung gemäss Anspruch 4, dadurch gekennzeichnet, dass das Führungsteil (16) des Schlitzformers (17) eine Leiste, eine unterbrochene Leiste oder eine Reihe von mindestens zwei Stiften ist.

6. Vorrichtung gemäss einem der Ansprüche 4 bis 5, dadurch gekennzeichnet, dass der Schlitzformer (17) im wesentlichen eine Winkelleiste mit einem umgekehrt L-förmigen Querschnitt ist, wobei das L keinen rechten Winkel aufweist, der Fuss des L das Schlitzwerkzeug (15) darstellt, und der Balken des L im wesentlichen das Führungsteil (16) ist.

7. Vorrichtung gemäss Anspruch 6, dadurch gekennzeichnet, dass Fuss (15) und Balken (16) des L einen Winkel im Bereich von 50° bis 85° und bevorzugt von etwa 75° bilden.

8. Vorrichtung gemäss einem der Ansprüche 4 bis 7, dadurch gekennzeichnet, dass das Führungsteil in die schlitzförmig ausgebildete und in der Spritzgiessform ausgebildete Führung (28) hineinragt, wobei der Schlitz (28) der Dicke des Führungsteils (16) so angepasst ist und die Oberflächen von Schlitz (28) und Führungsteil (16) so gewählt sind, dass das Führungsteil (16) im wesentlichen spielfrei, aber leichtgängig in der Führung (28) gleiten kann.

9. Vorrichtung gemäss einem der Ansprüche 4 bis 8 mit einer Spritzgiessform mit einem Schieber (5), der mindestens zwei Sätze von Formen aufweist, nämlich für obere und untere Endglieder bzw. für Reissverschlussbänder,
wobei der Schieber (5) quer zur Reihe der Formen (9) für die Reissverschlusszähne beweglich ist und mindestens eine Form (26) für mindestens ein Reissverschlussband aufweist, die im wesentlichen aus Formen für Reissverschlusszähne besteht,
wobei das Spritzmaterial über mindestens eine Düse (43) aus einem Heisskanal einem sich längs der Zahnformen (9) erstreckenden Angusskanal (11) zugeführt werden kann, aus dem es in die Zahnformen (9) und in die Formen (26; 20, 21; 25) im Schieber (5) gelangen kann, und
wobei der Schieber (5) an einem Ende der Bandformen (3) angeordnet ist, dadurch gekennzeichnet, dass mindestens zwei Düsen (41, 42, 43) vorhanden sind und der Heisskanal (35) von der am weitesten entfernt vom Schieber angeordneten Düse (41) zum Schieber (5) hin führt und die Spritzmaterialeinlassöffnung (39) des Heisskanals am schieberfernen Ende des Heisskanals (35) angeordnet ist.

10. Spritzgiessform gemäss Anspruch 9, dadurch gekennzeichnet, dass der Angusskanal (11) in einem Abstand vom Schieber (5) gemäss der Länge des herzustellenden Reissverschlusses durch einen im Angusskanal (11) vorhandenen Längeneinsteller (29) verschliessbar ist.

11. Spritzgiessform gemäss Anspruch 10, dadurch gekennzeichnet, dass der Längeneinsteller (29) den Angusskanal (11) ausfüllt und vom schieberentfernten Ende einschiebbar ist.

12. Spritzgiessform gemäss einem der Ansprüche 10 oder 11, dadurch gekennzeichnet, dass der Längeneinsteller (29) durch Halterungen und/oder Führungsmittel in der oberen Formhälfte (30) gehalten wird.

13. Spritzgiessform gemäss einem der Ansprüche 9 bis 12, dadurch gekennzeichnet, dass die Düsen (41, 42, 43) einzeln steuerbar sind.

14. Spritzgiessform gemäss einem der Ansprüche 9 bis 13, dadurch gekennzeichnet, dass der Schieber mindestens drei Sätze von Formen (20, 21; 25; 26) aufweist und dass ein auswechselbarer Anschlag (22) für den Schieber (5) an der Form (1) angebracht ist, wobei durch Auswechseln des Anschlags (22) zwischen mindestens zwei Endstellungen des Schiebers gewählt werden kann, in denen sich jeweils ein anderer der Formensätze (20, 21; 25) des Schiebers (5) in der zum Spritzgiessen nötigen Position befindet.

## Claims

1. Method for injection moulding a zip fastener having at least one tape comprising teeth (32) which are attached to a carrier tape (31), the teeth (32) being provided with bases which connect them to the carrier tape (31), and the heads of the teeth (32) being provided with a slit, in an injection mould (1, 30) in which the teeth (32) are moulded to said tape (31) laid down in said injection mould and which contains at least one slit former (17) for producing said slit in the teeth heads, characterized in that the slit former (17) is moved in the ejecting direction when the tape (31) is ejected from the mould after the injection, the slit former (17) being pulled out of the tooth head slits by the double action of a guide (28) which is disposed obliquely to said ejecting direction.

2. Method according to claim 1, characterised in that the slit former movement is effected synchronously with the ejecting movement.

3. Method according to claim 1 or 2, characterised in that ejectors (45, 46) are provided which during the ejection press on sprue parts (11) of the teeth (32) and on slit formers (17) directly or via intermediate elements and which forcibly withdraw at least the slit formers (17) when returning to the injecting position.

4. Device for carrying out the method according to one of claims 1 to 3 with an injection mould which comprises at least one row of moulds (9) for the teeth of a zip fastener and at least one slit former (17) for shaping slits in the heads of the teeth (32), and whose mould partition plane extends about centrally through the tooth moulds (9), characterised in that the slit former comprises, in addition to its slit shaping portion (15) which serves for the formation of slits in the tooth heads, a guide portion (16) which is slidingly guided within a double acting guide (28) which is arranged within the injection mould (1) obliquely to the ejecting direction and whose shape is complementary to the guide portion (16) of the slit former.

5. Device according to claim 4, characterised in that the guide portion (16) of the slit former (17) is a strip, an interrupted strip or a row formed of at least two pins.

6. Device according to one of claims 4 to 5, characterised in that the slit former (17) is essentially an angled strip having an inversed L-shaped cross-section, said L forming an angle different from 90°, the base of the L representing the slit former tool (15), and the leg of the L being essentially the guide portion (16).

7. Device according to claim 6, characterised in that the base (15) and the stem (16) of the L enclose an angle in the range of from 50° to 85°, preferably of about 75°.

8. Device according to one of claims 4 to 7, characterised in that the guide portion extends into the slot-shaped guide (28) arranged in the injection mould, the slot (28) being adapted to the thickness of the guide portion (16), and the surfaces of the slot (28) and of the guide portion (16) being selected such as to allow an essentially play-free but smooth sliding of the guide portion (16) within the guide (28).

9. Device according to one of claims 4 to 8, comprising an injection mould with a slider (5) which includes at least two sets of moulds, namely for top and bottom stop elements and for zip fastener tapes, respectively,
the slider (5) being movable transversely to the row of moulds (9) for the zipper teeth and comprising at least one mould (26) for at least one zipper tape which essentially consists of moulds for zipper teeth,
the injection material being capable of being supplied by at least one nozzle (43) from a hot runner to a gate runner (11) extending along the tooth moulds (9), from which it can pass into the tooth moulds (9) and into the moulds (26; 20, 21; 25) within the slider (5),
the slider (5) being disposed at one end of the tape moulds (3),
characterised in that at least two nozzles (41, 42, 43) are provided and the hot runner (35) extends from the nozzle (41) furthest away from the slider towards the slider (5), and in that the opening (39) of the hot runner for the feed of injection material being disposed at the end of the hot runner (35) furthest away from the slider.

10. Injection mould according to claim 9, characterised in that the gate runner (11) is closable at a distance from the slider (5) which corresponds to the length of the zip fastener to be manufactured by a length adapter (29) arranged within the gate runner (11).

11. Injection mould according to claim 10, characterised in that the length adapter (29) fills up the gate runner (11) and is arranged to be inserted from the end of the mould furthest away from the slider.

12. Injection mould according to one of claims 10 or 11, characterised in that the length adapter (29) is held by supporting and/or guiding means within the upper mould half (30).

13. Injection mould according to one of claims 9 to 12, characterised in that the nozzles (41, 42, 43) are individually controllable.

14. Injection mould according to one of claims 9 to 13, characterised in that the slider comprises at least three sets of moulds (20, 21; 25; 26) and the mould (1) comprises an interchangeable stop (22) for the slider (5), the exchange of the stop (22) allowing the selection among at least two end positions of the slider in each of which another one of the mould sets (20, 21; 25) of the slider (5) is in the position required for injection moulding.

## Revendications

1. Procédé de moulage par injection d'une fermeture éclair ayant au moins une bande qui présente des dents (32) attachées à une bande porteuse (31), les dents (32) présentant des pieds qui les relient à la bande porteuse (31), et les têtes des dents (32) présentant une fente, dans un moule à injection (1, 30) dans lequel les dents (32) sont moulées sur la bande porteuse (31) mise en place et qui présente au moins un mouleur de fentes (17) pour la formation d'une fente dans les têtes des dents, caractérisé en ce que le mouleur de fentes (17) est déplacé en direction d'éjection lorsque la bande (31) est éjectée du moule après le moulage, le mouleur de fentes (17) étant retiré des fentes dans les têtes des dents par l'action d'un guidage (28) à double action oblique à ladite direction.

2. Procédé selon la revendication 1, caractérisé en ce que le déplacement du mouleur de fentes est synchronisé au mouvement d'éjection.

3. Procédé selon la revendication 1 ou 2, caractérise en ce que pendant l'opération d'éjection, des éjecteurs (45, 46) pressent directement ou par des éléments intermédiaires sur des culots d'injection (11) des dents (32) et sur des mouleurs de fentes (17), et qu'ils retirent de manière forcée au moins les mouleurs de fentes (17) lorsqu'ils retournent à la position d'injection.

4. Dispositif pour la mise en oeuvre du procédé selon l'une des revendications 1 à 3 à l'aide d'un moule à injection comprenant au moins une rangée de moules (9) pour les dents d'une fermeture éclair et au moins un mouleur de fentes (17) pour la formation de fentes dans les têtes des dents (32), et dont le plan de séparation passe par le centre des moules à dents (9) approximativement, caractérisé en ce que le mouleur de fentes présente, en plus de la partie formatrice (15) destinée à la formation des fentes dans les têtes des dents, une partie de guidage (16) qui est guidée de manière mobile dans un guidage (28) à double action du moule à injection (1), de conformation oblique à la direction d'éjection et complémentaire à la partie de guidage (16) du mouleur de fentes.

5. Dispositif selon la revendication 4, caractérisé en ce que la partie de guidage (16) du mouleur de fentes (17) est une nervure, une nervure discontinue ou une rangée composée d'au moins deux chevilles.

6. Dispositif selon l'une des revendications 4 à 5, caractérisé en ce que le mouleur de fentes (17) est essentiellement une nervure angulaire de coupe transversale en L renversé, le L n'ayant pas d'angle droit, la base du L représentant l'outil formateur (15) des fentes, et le bras du L étant la partie de guidage (16) essentiellement.

7. Dispositif selon la revendication 6, caractérisé en ce que la base (15) et le bras (16) du L forment un angle compris entre 50° et 85°, préférablement un angle d'environ 75°.

8. Dispositif selon l'une des revendications 4 à 7, caractérisé en ce que la partie de guidage rentre dans le guidage (28) en forme de fente qui est formé dans le moule à injection, la fente (28) étant adaptée à l'épaisseur de la partie de guidage (16) de telle sorte que, et les surfaces de la fente (28) et de la partie de guidage (16) étant choisies de telle manière que la partie de guidage (16) peut glisser dans le guidage (28) essentiellement sans jeu mais facilement.

9. Dispositif selon l'une des revendications 4 à 8, comprenant un moule à injection ayant un curseur (5) qui présente au moins deux jeux de moules, à savoir pour des éléments terminaux supérieurs et inférieurs resp. pour des bandes de fermetures éclair,
le curseur (5) étant déplaçable transversalement à la rangée de moules (9) pour les dents de la fermeture éclair et comportant un moule (26) pour au moins une bande d'une fermeture éclair, composé essentiellement de moules pour dents d'une fermeture éclair,
la matière injectée pouvant être amenée par au moins une buse (43) d'un canal chauffant à un canal d'injection (11) s'étendant le long des moules des dents (9) et duquel elle peut passer aux moules des dents (9) et aux moules (26; 20, 21; 25) dans le curseur (5), et
le curseur (5) étant disposé à l'une des extrémités des moules (3) contenant les bandes, caractérisé en ce que les deux buses (41, 42, 43) sont présentes au moins, que le canal chauffant (35) conduit de la buse (41) la plus éloignée du curseur vers le curseur (5), et que l'ouverture d'entrée (39) de la matière injectée du canal chauffant est disposée à l'extrémité éloignée du canal chauffant (35).

10. Moule à injection selon la revendication 9, caractérisé en ce que le canal d'injection (11) est capable d'être obturé, à une distance du curseur (5) qui correspond à la longueur de la fermeture éclair à fabriquer, par un dispositif de réglage en longueur (29) disposé dans le canal d'injection (11).

11. Moule à injection selon la revendication 10, caractérisé en ce que le dispositif de réglage en longueur (29) emplit le canal d'injection (11) et est enfichable depuis l'extrémité éloignée du curseur.

12. Moule à injection selon l'une des revendications 10 ou 11, caractérisé en ce que le dispositif de réglage en longueur (29) est retenu dans le demi-moule supérieur (30) par des retenues et/ou des moyens de guidage.

13. Moule à injection selon l'une des revendications 9 à 12, caractérisé en ce que les buses (41, 42, 43) sont capables d'être commandées individuellement.

14. Moule à injection selon l'une des revendications 9 à 13, caractérisé en ce que le curseur comporte au moins trois jeux de moules (20, 21; 25; 26), et qu'une butée (22) échangeable pour le curseur (5) est attachée au moule (1), l'échange de la butée (22) permettant de choisir entre au moins deux positions extrêmes du curseur dans chacune desquelles un autre des jeux de moules (20, 21; 25) du curseur (5) se trouve dans la position nécessaire pour le moulage par injection.
